# EUROPEAN PATENT SPECIFICATION

(11) **EP 4 031 772 B1**
(45) Date of publication and mention of the grant of the patent: **11.03.2026**
(21) Application number: 20864341.1
(22) Date of filing: 18.09.2020
(51) Int. Cl.: F04D 9/04, F04D 9/00, G01F 23/00, G01F 23/26, G01F 23/80

(54) **PUMPING SYSTEM**
PUMPSYSTEM
SYSTÈME DE POMPAGE

(30) Priority: 20.09.2019 US 201962903387 P
(43) Date of publication of application: 27.07.2022
(73) Proprietor: Smith & Loveless, Inc., Lenexa, KS 66215 (US)
(72) Inventor: GROVE, Robert, A., Parkville, MO 64152 (US); MRKVICKA, Rodney, S., Leawood, KS 66209 (US); NEEDHAM, Mark, C., Spring Hill, KS 66083 (US); KELLY, John, K., Overland Park, KS 66204 (US)
(74) Representative: Croston, David
(86) International application number: PCT/US2020/051393
(87) International publication number: WO 2021/055677

(56) References cited:
- JP-A- 2007 127 615
- US-A- 5 012 683
- US-A- 5 035 583
- US-A- 5 623 252
- US-A1- 2005 126 282
- US-A1- 2005 271 518
- US-A1- 2012 096 938
- US-B1- 6 295 881

## Description

### FIELD OF THE INVENTION

The present invention is directed toward pumps, and particularly toward vacuum primed pumps.

### BACKGROUND OF THE INVENTION

Pumps for liquids or fluids, often having non-microscopic solid particles therein, are well known in the art, and commonly use a rotary or centrifugal action to mechanically impel the fluid in the desired direction.

Typically such pumps are vacuum primed and are positioned above the level of the liquid being pumped. In such installations, the pump will not operate properly unless there is a head of fluid from the lower liquid level into the pump itself. See, for example, U.S. Patent No. 7,331,769 which discloses a pumping system with vacuum priming. That is, if the fluid does not reach into the pump, the pump will merely drive air and will not create a sufficient force to draw the fluid up to the pump for the desired pumping. Therefore, such pumps are primed with fluid to ensure that there is the desired head of fluid extending into the pump so that it may operate as desired. Moreover, it is important that the pump impeller, mechanical seal or packing be completely submerged in order to prevent air from being entrained in the pump and potentially air locking the impeller to prevent pump operation. This has typically been accomplished by providing a separate vacuum pump, connected to the primary pump at its highest point, to ensure that all air is extracted as desired.

Heretofore, in uses where the fluid includes debris, sensors have been used to detect the presence of fluid at the level required for ensure the pump is in the primed state, such as shown in U.S. Patent Nos. 3,519,369 and 5,035,583. However, those sensors have extended into the priming chamber sufficiently to come into contact with a significant amount of debris, and the sensors have been such that debris could wrap or coat the priming sensor, causing false prime detections.

Further, when such pumps are used in applications where they will encounter different and changing conditions (*e.g*., where the fluid includes debris and/or different components such as both water and oils), false prime detections are also possible when the conditions where used change.

Stewart et al. U.S. Patent No. 6,295,881 discloses a sensor package for proximity detectors adapted for use with materials having a significant angle of repose.

Vaught U.S. Patent No. 5,035,583 discloses a sewage pump with a vacuum priming system having a sensor with a vertical sensing face.

Yosoji Japanese Publication JP 2007127615 discloses a capacitance level sensor which detects liquid in a container, and Cacciola et al. U.S. Patent No. 5,623,252 discloses a liquid level detector using audio frequencies.

The present invention is directed toward overcoming one or more of the problems set forth above.

### SUMMARY OF THE INVENTION

In one aspect of the disclosure herein, a pumping system includes a primary pump for pumping fluid from an inlet out an outlet, a priming chamber disposed above the pumping chamber, and a primer for drawing fluid into the priming chamber up to at least a selected depth at which the primary pump will properly operate. A sensor has a cylindrical shaft extending into the priming chamber with a sensing dome on an end of the cylindrical shaft at the selected depth, the sensing dome shaped as a spherical cap with a vertical base on an end of the cylindrical shaft, the cap vertical base having a diameter less than the cylindrical shaft diameter, wherein the sensing dome is adapted to detect the presence of liquid at the selected depth in the priming chamber and signal whether liquid is present at the selected depth. A controller is adapted to control operation of the pump and primer based on whether the signal indicates the presence of fluid at the selected depth.

In one form of the pumping system, the sensor is adapted to adjust the sensitivity of the sensor in correlation with characteristics of the fluid in the priming chamber.

In another form of the pumping system, the sensor includes an algorithm adapted to sense the presence of liquid in environments having various forms of debris in the liquid including strings and rags, the algorithm having settings for variables including at least one of dampening of the electromagnetic field, conductance of the electric field, and permittivity of the magnetic field.

In still another form of the pumping system, the sensor periodically signals to the controller whether liquid is present at the selected depth, and the controller changes pump operation between prime and not prime states when the sensor signal indicates a changed state for a selected period.

In yet another form of the pumping system, the controller is adapted to control operation of the pump and primer by (a) activating the primer when the sensor signal indicates that liquid is not present at the selected depth, and (b) allowing the primary pump to be operated when the sensor signal correlates with a fluid depth in the priming chamber which is at least the selected fluid depth for fluid having characteristics correlating to the fluid in the priming chamber. In a further form, one of the fluid characteristics is the presence or absence of oil in water.

In yet another form of the pumping system, the controller allows operation of the pump when the sensor signal indicates the presence of liquid at the selected depth for a selected period of time.

In another aspect of the invention, a pumping system includes a primary pump for pumping fluid from an inlet out an outlet with a priming chamber disposed above the pumping chamber. A primer draws fluid into the priming chamber up to at least a selected depth at which the primary pump will properly operate. The pumping system also includes a controller and a domed sensor supported in the priming chamber at the selected depth. The sensor is adapted to detect an interface between liquid and air at the selected depth in the priming chamber and send the detected interface to a controller. The controller is adapted to (a) correlate the selected fluid depth in the priming chamber with selected sensor detected interfaces based on characteristics of the fluid in the priming chamber, and (b) control operation of the pump and primer based on whether the selected detected interface sent by the sensor correlates with the selected fluid depth in the priming chamber for fluid having characteristics correlating to the fluid in the priming chamber.

In a further form of this pumping system, the controlled operation of the pump and primer comprises (a) activating the primer when the detected interface sent by the sensor correlates with a fluid depth in the priming chamber which is less than the selected fluid depth for fluid having characteristics correlating to the fluid in the priming chamber, and (b) allowing the primary pump to be operated when the detected interface sent by the sensor correlates with a fluid depth in the priming chamber which is at least the selected fluid depth for fluid having characteristics correlating to the fluid in the priming chamber.

In another form of this pumping system, the fluid characteristics may include at least one of the presence or absence of fats, oils or grease (FOG) or a large amount of solid debris in the fluid.

In still another form of this pumping system, the controller allows operation of the pump when the sensor sends the detected interface between liquid and air to the controller for a selected period of time.

In yet another form of this pumping system, the sensor has a cylindrical shaft extending into the priming chamber with a sensing dome on an end of the cylindrical shaft, with the sensing dome shaped as a spherical cap with a vertical base on an end of the cylindrical shaft, the cap vertical base having a diameter less than the cylindrical shaft diameter.

Other objects, features, and advantages of the invention will become apparent from a review of the entire specification, including the appended claims and drawings.

### BRIEF DESCRIPTION OF THE DRAWINGS

Figure 1 is a cross-sectional view of one pump incorporating the advantageous priming operation;
Figure 2 is a cross-sectional view of a pump suction chamber according to the prior art;
Figure 3 is a cross-sectional view of a pump suction chamber according to Fig. 1;
Figure 4 is a circuit diagram for sensing fluid in the pump suction chamber according to Fig. 1;
Figure 5 is a circuit diagram for controlling pump operation based on sensing fluid in the pump station chamber using the sensor and incorporating an optional communication module to provide monitoring of the sensor and allow sensor settings to be modified;
Figure 6 is a flow chart showing detection of fluid by sensor in the pump suction chamber; and
Figure 7 is a flow chart showing monitoring of the pump sensor to determine when maintenance is required.

### DETAILED DESCRIPTION OF THE PREFERRED EMBODIMENT

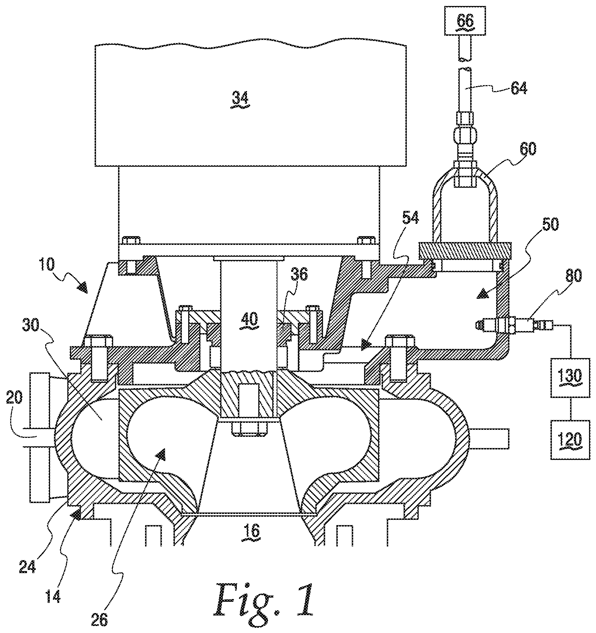

A pumping system 10 according to the present invention is shown in Fig. 1. The system 10 includes a primary pump 14 and may be used to pump fluid from a level beneath the primary pump 14 into a pump inlet 16 and then out a pump outlet 20.

The primary pump 14 illustrated particularly in Fig. 1 includes a suitable housing such as volute 24 having an impeller 26 rotatably driven in an impeller or pumping chamber 30 by a suitable motor 34. A suitable seal 36 is provided around the drive shaft 40 of the motor 34 to seal the motor 34 from the volute 24. It should be understood, however, that the present invention may be used with a wide variety of primed pumps, and that the details of the primary pump 14 illustrated in the Figures are merely examples of one such pump with which the invention may be advantageously used with the present invention.

A suction or primer chamber 50, which may be a part of the adapter for the pump motor 34 and volute 24, is defined above the volute 24, and is used to draw priming fluid into the pump inlet 16 as described below. A throttle opening 54 is provided between the suction chamber 50 and the pumping chamber 30.

A clear plastic housing dome 60 may be provided above the suction chamber 50 to allow for visual inspection into the dome 60. A suitable vacuum line 64 is connected to the dome 60 for drawing a vacuum in the suction chamber 50 as appropriate. Specifically, a vacuum pump 66 may be connected to the vacuum line 64 and selectively operated to prime the primary pump 14. It should be appreciated that any vacuum pump 66 capable of generating a vacuum sufficient to prime the primary pump 14 will be suitable.

U.S. Patent No. 7,331,769 B2 entitled "Pumping System" and issued February 19, 2008 discloses a pumping system similar to that shown in Fig. 1 herein.

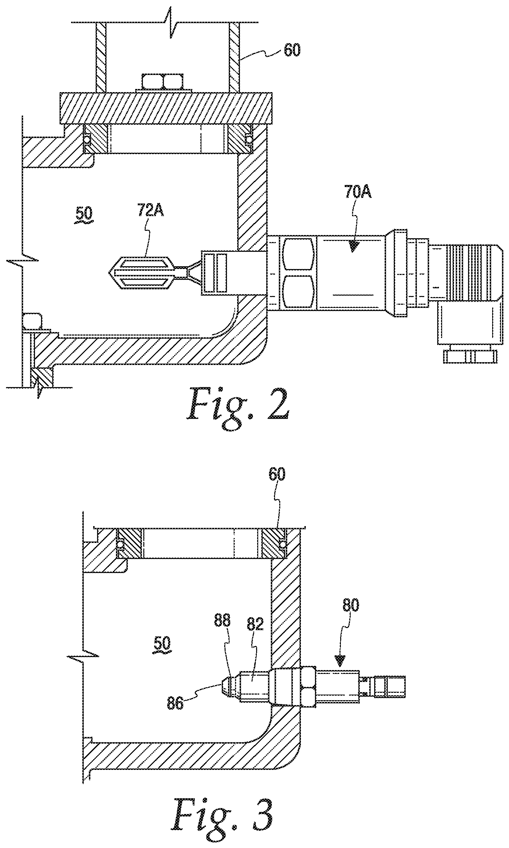

In prior art systems, a sensor 70A such as illustrated in Fig. 2 extended through an opening into the suction chamber 50 and included an end sensing element 72A which detect the fluid level in the suction chamber 50. Specifically, the sensing element 72A is secured at a height where it will be contacted by fluid in the suction chamber 50 when the fluid is at a level to prime the primary pump 14 - that is, is sufficiently high so that the fluid level is sufficiently high that the primary pump 14 will operate properly. However, as previously noted, in uses where the fluid includes debris, sensors 70A such as illustrated in Fig. 2 including forks with an air gap in between will not only come into contact with a significant amount of debris, but such that debris has wrapped or coated the sensing element 72A, causing false prime detections.

Fig. 3 illustrates a different sensor 80 which may be advantageously used with pumping systems 10 such as disclosed herein. The sensor 80 has a generally cylindrical shaft 82 extending into the priming chamber 50 with a sensing dome 86 on the end of the cylindrical shaft 82 at the fluid height required for the pump 14 to operate properly. The sensing dome 86 is shaped as a spherical cap or segmented dome with a vertically oriented base 88 on the end of the cylindrical shaft 82. The cap vertical base 88 has a diameter less than the diameter of the cylindrical shaft 82.

Further, the sensor 80 may advantageously be a capacitive sensor having a generally horizontal face for sensing the relative movement of the interface between the fluid and air in the pump priming chamber 50. The sensing dome 86 generates an electrical field in the priming chamber 50, measuring the dielectric properties of the medium in the pump chamber to sense only liquid or fluid. As described in greater detail herein, once fluid is detected, the sensor changes state to ON indicating that the pump is primed and thus is ready to operate.

The sensor 80 incorporates a novel prime sensing technology in a wastewater environment that contains debris such as rags, strings, wipes or other flushable debris that can create maintenance issues for other types of sensors, and has custom settings to provide better system response than standard sensors. The sensor 80 evaluates the media at the probe's face using multiple measurement points, which measurements are controlled by sensitivity settings in the sensor 80 to optimize the sensor performance and determine if there is liquid present at the sensor's 80 face. An embedded algorithm in the sensor 80 evaluates the measurements and provides signals to indicate when liquid is present at the probe.

By providing such a sensor 80 as described, there is a reduced surface area and reduced projection into the priming chamber 50 relative to previously used sensors (such as sensor 70A in Fig. 2) to thereby prevent debris in the fluid from wrapping or coating the sensor 80. This reduces false priming and further limits the frequency of maintenance necessary to clean the prior sensors such as 70A.

The sensor 80 incorporates a new sensing technology to create effective pump priming in this application and in a wastewater environment that contains debris such as rags, strings, wipes or other flushable debris that can create maintenance issues for other types of sensors. The sensor 80 advantageously has custom settings including reaction time to provide better system response for wastewater applications. The sensor 80 also advantageously incorporates high-frequency spectrum sweeping (to evaluate the media at the probe's face using multiple measurement points), dampening of the electromagnetic field, conductance of the electric field, and permittivity of the magnetic field. These measurements can be advantageously controlled by custom sensitivity settings in the sensor 80 to optimize the sensor performance for this application and determine if there is liquid present at the sensor's 80 face. An algorithm may be advantageously embedded in the sensor 80 to evaluate the measurements and provide signals to indicate when liquid is present at the probe.

The sensor 80 may be advantageously used for detecting the presence of fluid as described herein.

The pumping system 10 disclosed herein also provides advantageous operation in conjunction with the sensor 80.

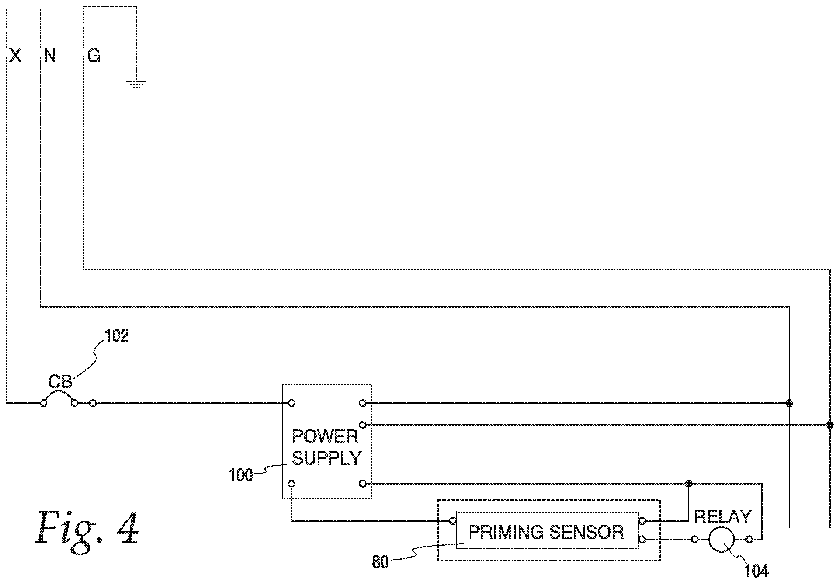

Specifically, as illustrated in Fig. 4, the sensor 80 may be provided with a suitable power supply 100 to operate as desired (and as disclosed further herein). A circuit breaker 102 is provided to enable the power to be shut off when necessary, as for example, during maintenance. The sensor 80 is connected via hardwiring to a relay 104 which changes state based on whether the sensor 80 indicates that the primary pump 14 is primed or not.

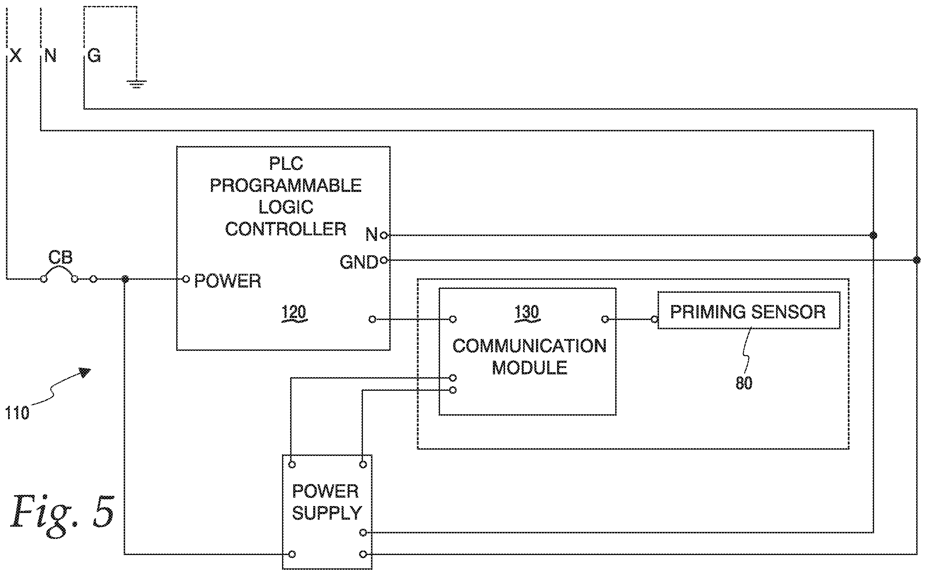

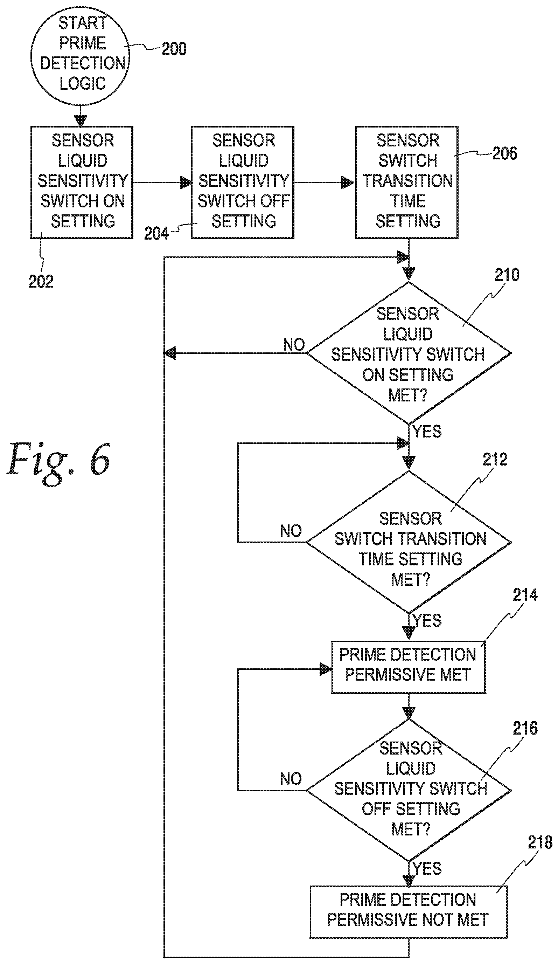

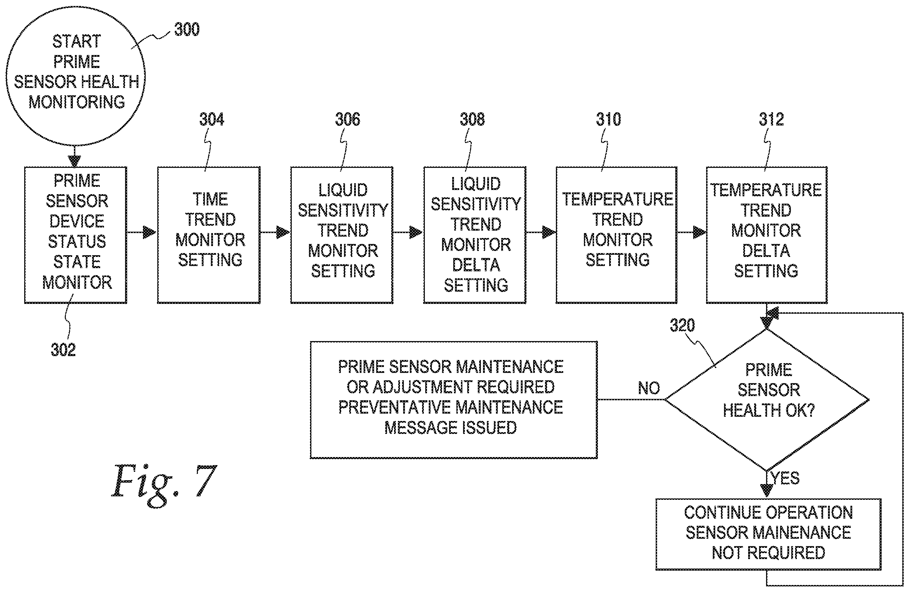

Further, as illustrated in Figs. 1 and 5, the sensor 80 may be a part of a system 110 in which a powered programmable logic controller (PLC) 120 and communication module 130 cooperate with the sensor 80 to facilitate control of the pump system 10 as illustrated in Figs. 6 and 7.

One communication module 130 which may be advantageously used with the system 110 as described herein is an IO Link Master.

Basic operation of the pumping system 10 is as follows.

If the fluid level is lower than desired in the pump 14 for pump operation, the vacuum pump 66 will be operated to generate a vacuum in vacuum line 64 and in turn generate a vacuum in suction chamber 50.

Once the level of the fluid has sufficiently reached a sufficient depth that the pump 14 may be considered primed, the dome 86 of the sensor 80 will be contacted by the fluid and, as described in greater detail below, the sensor 80 will indicate that the pump 14 is primed and the vacuum pump 66 may be turned off.

Heretofore, the use of sensors 70A in pumping applications such as described herein have relied upon fixed settings for the sensor 70A independent of the initial and/or changing conditions of the specific installation. The system 110 disclosed herein, by contrast, allows for fine tuning of liquid detection settings for difficult wastewater installations as well as adjustment over time based on changing conditions. Moreover, the system 110 disclosed herein provides sensor feedback to enable monitoring to facilitate sensor maintenance and/or adjustment when appropriate. That is, as disclosed herein, the communication module 130, controller 120 and associated logic provide diagnostics which allow the settings of the sensor 80 to be appropriately adjusted and monitored. The control logic and sensor 80 allow the operator to adjust the prime detection control settings for sensor switching and time set points via an operator interface screen.

A flow chart showing the adjustable prime detection control logic is shown in Figure 6.

When first set up (step 200), settings for the sensor 80 establish the sensitivity of the sensor 80 to indicate when liquid is present (step 202) and when liquid is not present (step 204), as well as the time period over which such ON/OFF (liquid present/not present) state must exist (step 206) to recognize that the sensed state has transitioned from liquid present (or not present) to liquid not present (or present). These settings (steps 202, 204, 206 may be factory set on the sensor itself, but if adjusted for particular installation conditions may be adjusted at the factory or adjusted in the field (by using, e.g., a PC, PC software and cable connected to the sensor) with such adjusted settings saved to the sensor 80.

During operation, if the sensor liquid sensitivity switch ON setting (0-100%) is met (step 210), then an internal time delay starts in the sensor 80. The liquid sensitivity switch ON setting is met when the percentage read by the sensor 80 is greater than or equal to the set point (set at step 202). If that time delay setting (in, *e.g.,* 0.1 second increments) is met and the sensor switch ON setting is still met (step 212), then the sensor 80 indicates that the pump 14 is primed (step 214).

Thereafter, if the sensor 80 has been indicating prime (step 214), and the sensor detects that the current liquid sensitivity is less than the switch off setting (0-100%) (step 216), then the sensor 80 no longer indicates prime (step 218) - that is, recognizes that the primary pump 14 is not primed, and will remain in that sensed condition until the sensor liquid sensitivity switch ON setting (0-100%) is met (step 210) for a sufficient time period (step 212) at which point it will switch to indicating prime again (step 214).

It should be appreciated that if the sensor settings are too sensitive and thus cause false prime indications, an operator would soon recognize this and adjust the settings (e.g., using a connected PC, software and cable) (steps 202, 206 ) to make them less sensitive. Examples of the sensor settings being too sensitive could include the switch ON set point being set too low (step 202), the switch OFF set point being set too high (step 204), or transition time set point set too low (step 206 ). Conversely, if the sensor settings are not sensitive enough, the sensor might not indicate that the pump is primed even though it is. Examples of the sensor settings that are not sensitive enough could include the switch ON set point set too high (step 202), or the transition time set point set too high (step 206). Further, if the switch OFF set point is set too low, then the sensor 80 may not reset from a primed state (steps 214, 216), also causing a false prime detection.

In addition to the above described adjustability of the sensor 80, the system 110 which also includes the PLC 120 and communication module 130 provides diagnostics which monitor sensor performance to alert (via a connected human-machine interface ["HMI"]) when preventative maintenance is required (e.g., prompting an operator that the sensor is dirty, and may need maintenance).

Figure 7 illustrates the steps of monitoring and providing diagnostics (step 300) also via the HMI connected to the communication module 130. That is, as illustrated in Fig. 5, the priming sensor 80 is connected to a suitable communication module 130 connected to the PLC 120 and communicates multiple sensor parameters to the HMI, such as device status state (step 302), transition time set point (step 304), liquid sensitivity switch ON and switch OFF set points (steps 306, 308), and the current temperature (steps 310, 312). Various sensor settings, such as the liquid sensitivity switch ON and OFF set points and transition time set points, can be adjusted by an operator through the HMI, with such adjusted settings then stored to the sensor 80, with the latest settings used to indicate the pump's prime state. Moreover, since the health of the sensor 80 (step 320) may be advantageously monitored by an operator via the HMI, the operator may readily determine whether maintenance is required. If the sensor 80 is "healthy" (*i.e.,* operating properly), the desired continuing operation of the pump 14 may be allowed (step 322), whereas if the sensor 80 is not healthy, the operator will via the HMI recognize and provide needed sensor maintenance and/or adjust the various settings to reflect the actual conditions then encountered by the pump 14.

The PLC 130 and associated sensor diagnostic monitoring logic allows for trending, monitoring sensor health and issuing preventative maintenance messages. It also allows the sensor settings to be adjusted to improve performance for a given environment. For example, in an environment with a wastewater stream, water with a high oil content may be encountered which will require the liquid sensitivity settings of the sensor 80 to be adjust to less sensitive values to indicate that the primary pump 14 is primed, whereas when clean water is encountered it will require the liquid sensitivity settings to be adjusted to more sensitive values to indicate that the pump is primed. Further, if the prime sensor device status monitor indicates the sensor 80 is not in a functional state, then via the HMI an operator may be informed that a sensor adjustment or maintenance is required.

Still further, because the liquid sensitivity and temperature are trended, this allows the sensor health to be advantageously monitored. The controller 130 monitors whether the sensor 80 is performing to acceptable levels (getting dirty or coated, or the application has water with high oil content) and needs setting adjustment or maintenance. That is, when a particular time trend monitor setting (step 304) is established, the PLC 130 may advantageously monitor one or more of the liquid sensitivity delta (step 308), temperature (step 310), and temperature delta (step 312) over that period. If, during that time, any of the monitored variables is out of the set range, the PLC 130 will recognize that maintenance is required and indicate that to the operator via the HMI. Similar maintenance indications may be provided if (a) the liquid sensitivity setting and liquid sensitivity delta settings are enabled and the current sensor liquid reading is not within the set range, and/or (b) the temperature setting and temperature delta settings are enabled and the current sensor temperature reading is not within the set range.

Further, an operator may select which trended values are necessary for sensor health monitoring and via the HMI enable or disable them, depending on their necessity. For example, if the temperature and temperature delta are not necessary, then the user can disable those in a manner whereby these variables will still be conveyed via the HMI but they will not be used to determine the sensor health and/or indicate whether sensor maintenance is required. Alternatively, the same can be done with the liquid sensitivity settings, if needed.

Still other aspects, objects, and advantages of the present invention can be obtained from a study of the specification, the drawings, and the appended claims. It should be understood, however, that the present invention could be used in alternate forms where less than all of the objects and advantages of the present invention and preferred embodiment as described above would be obtained.

## Claims

1. A pumping system (10), comprising:
a primary pump (14) for pumping fluid from an inlet (16) out an outlet (20), said primary pump (14) including a pumping chamber (30) adapted to receive fluid from said inlet (16);
a priming chamber (50) disposed above said pumping chamber (30);
a primer (64, 66) for drawing fluid into said priming chamber up to at least a selected depth at which said primary pump (14) will properly operate;
a sensor (80) being adapted to detect the presence of liquid at said selected depth in the priming chamber (50) and signal whether liquid is present at said selected depth;
and a controller (120) adapted to control operation of said primary pump (14) and primer (64, 66) based on whether said signal indicates the presence of fluid at said selected depth;
**characterized by**:
the sensor (80) having a cylindrical shaft extending into said priming chamber (50) with a sensing dome (86) on an end of the cylindrical shaft (82) at said selected depth, said sensing dome (86) shaped as a spherical cap with a vertical base (88) on an end of the cylindrical shaft (82), said cap vertical base (88) having a diameter less than the cylindrical shaft diameter.

2. The pumping system of claim 1, wherein said sensor (80) is adapted to adjust the sensitivity of said sensor (80) in correlation with characteristics of said fluid in said priming chamber (50).

3. The pumping system of claim 1, wherein said sensor (80) includes an algorithm adapted to sense the presence of liquid in environments having various forms of debris in the liquid including strings and rags, said algorithm having settings for variables including at least one of dampening of the electromagnetic field, conductance of the electric field, and permittivity of the magnetic field.

4. The pumping system of claim 1, wherein
said sensor (80) periodically signals to said controller (120) whether liquid is present at said selected depth; and
said controller (120) changes primary pump (14) operation between prime and not prime states when said sensor (80) signal indicates a changed state for a selected period.

5. The pumping system of claim 1, wherein said controller (120) is adapted to control operation of said primary pump (14) and primer by:
activating said primer (64, 66) when said sensor (80) signal indicates that liquid is not present at said selected depth, and
allowing said primary pump (14) to be operated when said sensor signal correlates with a fluid depth in said priming chamber (50) which is at least the selected fluid depth for fluid having characteristics correlating to said fluid in said priming chamber (50).

6. The pumping system of claim 5, wherein one of said fluid characteristics is the presence or absence of oil in water.

7. The pumping system of claim 1, wherein said controller (120) allows operation of said primary pump (14) when said sensor (80) signal indicates the presence of liquid at the selected depth for a selected period of time.

8. The pumping system of claim 1, wherein said sensor (80) detects an interface between liquid and air at said selected depth in the priming chamber (50), and sends said detected interface to a controller (120); and
said controller (120) controls operation by correlating said selected fluid depth in said priming chamber (50) with selected sensor (80) detected interfaces based on characteristics of said fluid in said priming chamber (50), and controlling said primary pump (14) and primer (64, 66) based on whether said selected detected interface sent by said sensor (80) correlates with said selected fluid depth in said priming chamber (50) for fluid having characteristics correlating to said fluid in said priming chamber (50).

9. The pumping system of claim 8, wherein said controlled operation of said pump (14) and primer (64, 66) comprises:
activating said primer (64, 66) when said detected interface sent by said sensor (80) correlates with a fluid depth in said priming chamber (50) which is less than the selected fluid depth for fluid having characteristics correlating to said fluid in said priming chamber (50), and
allowing said primary pump (14) to be operated when said detected interface sent by said sensor (80) correlates with a fluid depth in said priming chamber (50) which is at least the selected fluid depth for fluid having characteristics correlating to said fluid in said priming chamber (50).

10. The pumping system of claim 9, wherein said fluid characteristics may include at least one of the presence or absence of fats, oils or grease (FOG) or a large amount of solid debris in the fluid.

11. The pumping system of claim 8, wherein said controller (120) allows operation of said primary pump (14) when said sensor (80) sends said detected interface between liquid and air to said controller (120) for a selected period of time.

## Patentansprüche

1. Pumpsystem (10), umfassend:
eine Primärpumpe (14) zum Pumpen von Flüssigkeit aus einem Einlass (16) durch einen Auslass (20), wobei die Primärpumpe (14) eine Pumpenkammer (30) zur Aufnahme von Flüssigkeit aus dem Einlass (16) enthält,
eine Ansaugkammer (50), die oberhalb der Pumpenkammer (30) angeordnet ist,
eine Ansaugvorrichtung (64, 66) zum Ansaugen von Flüssigkeit in die Ansaugkammer bis zu einer bestimmten Tiefe, in der die Primärpumpe (14) ordnungsgemäß arbeitet,
einen Sensor (80), der dazu beschaffen ist, das Vorhandensein von Flüssigkeit in der gewählten Tiefe in der Ansaugkammer (50) zu erfassen und zu signalisieren, dass Flüssigkeit in dieser gewählten Tiefe vorhanden ist,
und eine Steuerung (120), die dazu beschaffen ist, den Betrieb der Primärpumpe (14) und der Ansaugvorrichtung (64, 66) in Abhängigkeit davon, ob das Signal das Vorhandensein von Flüssigkeit in der gewählten Tiefe anzeigt, zu steuern,
**dadurch gekennzeichnet, dass**:
der Sensor (80) einen zylindrischen Schaft aufweist, der sich in die Ansaugkammer (50) erstreckt, mit einer Sensorkuppel (86) an einem Ende des zylindrischen Schafts (82) in der gewählten Tiefe, wobei die Sensorkuppel (86) als Kugelkappe mit einer vertikalen Basis (88) an einem Ende des zylindrischen Schafts (82) ausgebildet ist, wobei die vertikale Basis (88) einen Durchmesser aufweist, der kleiner ist als der Durchmesser des zylindrischen Schafts.

2. Pumpsystem nach Anspruch 1, wobei der Sensor (80) dazu beschaffen ist, die Empfindlichkeit des Sensors (80) in Korrelation zu den Eigenschaften der Flüssigkeit in der Ansaugkammer (50) anzupassen.

3. Pumpsystem nach Anspruch 1, wobei der Sensor (80) einen Algorithmus umfasst, der dazu beschaffen ist, das Vorhandensein von Flüssigkeit in Umgebungen, die verschiedene Formen von Fremdkörpern in der Flüssigkeit aufweisen, einschließlich Fäden und Stofffetzen, zu erkennen, wobei der Algorithmus Einstellungen für Variablen aufweist, die mindestens eines von Dämpfung des elektromagnetischen Feldes, Leitfähigkeit des elektrischen Feldes und Permittivität des magnetischen Feldes umfassen.

4. Pumpsystem nach Anspruch 1, wobei
der Sensor (80) der Steuerung (120) periodisch signalisiert, ob Flüssigkeit in der gewählten Tiefe vorhanden ist, und
die Steuerung (120) den Betrieb der Primärpumpe (14) zwischen Ansaug- und Nicht-Ansaug-Zustand ändert, wenn das Signal des Sensors (80) für einen gewählten Zeitraum einen geänderten Zustand anzeigt.

5. Pumpsystem nach Anspruch 1, wobei die Steuerung (120) dazu beschaffen ist, den Betrieb der Primärpumpe (14) und der Ansaugvorrichtung zu steuern durch:
Aktivieren der Ansaugvorrichtung (64, 66), wenn das Signal des Sensors (80) anzeigt, dass keine Flüssigkeit in der gewählten Tiefe vorhanden ist, und
Ermöglichen der Primärpumpe (14), betrieben zu werden, wenn das Sensorsignal mit einer Flüssigkeitstiefe in der Ansaugkammer (50) korreliert, die mindestens der gewählten Flüssigkeitstiefe für eine Flüssigkeit entspricht, welche Eigenschaften aufweist, die mit der Flüssigkeit in der Ansaugkammer (50) korrelieren.

6. Pumpsystem nach Anspruch 5, wobei eine der Flüssigkeitseigenschaften das Vorhandensein oder Fehlen von Öl in Wasser ist.

7. Pumpsystem nach Anspruch 1, wobei die Steuerung (120) den Betrieb der Primärpumpe (14) ermöglicht, wenn das Signal des Sensors (80) das Vorhandensein von Flüssigkeit in der gewählten Tiefe über einen gewählten Zeitraum anzeigt.

8. Pumpsystem nach Anspruch 1, wobei der Sensor (80) eine Grenzfläche zwischen Flüssigkeit und Luft in der gewählten Tiefe in der Ansaugkammer (50) erfasst und diese erfasste Grenzfläche an eine Steuerung (120) sendet, und
die Steuerung (120) den Betrieb durch Korrelieren der gewählten Flüssigkeitstiefe in der Ansaugkammer (50) mit ausgewählten, vom Sensor (80) erfassten Grenzflächen steuert, basierend auf den Eigenschaften der Flüssigkeit in der Ansaugkammer (50), und das Steuern der Primärpumpe (14) und der Ansaugvorrichtung (64, 66) darauf basiert, ob die vom Sensor (80) gesendete, ausgewählte erfasste Grenzfläche mit der gewählten Flüssigkeitstiefe in der Ansaugkammer (50) für eine Flüssigkeit, die Eigenschaften aufweist, die mit der Flüssigkeit in der Ansaugkammer (50) korrelieren, korreliert,

9. Pumpsystem nach Anspruch 8, wobei der gesteuerte Betrieb der Pumpe (14) und der Ansaugvorrichtung (64, 66) umfasst:
Aktivieren der Ansaugvorrichtung (64, 66), wenn die vom Sensor (80) gesendete erfasste Grenzfläche mit einer Flüssigkeitstiefe in der Ansaugkammer (50) korreliert, die geringer ist als die gewählte Flüssigkeitstiefe für Flüssigkeit, die Eigenschaften aufweist, die mit der Flüssigkeit in der Ansaugkammer (50) korreliert, und
Ermöglichen der Primärpumpe (14), betrieben zu werden, wenn die vom Sensor (80) gesendete erfasste Grenzfläche mit einer Flüssigkeitstiefe in der Ansaugkammer (50) korreliert, welche mindestens der gewählten Flüssigkeitstiefe für Flüssigkeit entspricht, die Eigenschaften aufweist, die mit der Flüssigkeit in der Ansaugkammer (50) korreliert.

10. Pumpsystem nach Anspruch 9, wobei die Flüssigkeitseigenschaften mindestens eines von Vorhandensein oder Fehlen von Fetten, Ölen oder Schmierstoffen (FOG) oder eine große Menge an festen Fremdkörpern in der Flüssigkeit umfassen können.

11. Pumpsystem nach Anspruch 8, wobei die Steuerung (120) den Betrieb der Primärpumpe (14) ermöglicht, wenn der Sensor (80) die erfasste Grenzfläche zwischen Flüssigkeit und Luft für einen bestimmten Zeitraum an die Steuerung (120) sendet.

## Revendications

1. Un système de pompage (10), comprenant :
une pompe primaire (14) pour pomper du fluide d'une entrée (16) vers une sortie (20), ladite pompe primaire (14) comprenant une chambre de pompage (30) adaptée pour recevoir du fluide de ladite entrée (16) ;
une chambre d'amorçage (50) disposée au-dessus de ladite chambre de pompage (30) ;
un amorce (64, 66) pour aspirer le fluide dans ladite chambre d'amorçage jusqu'à au moins une profondeur sélectionnée à laquelle ladite pompe primaire (14) fonctionnera correctement ;
un capteur (80) étant adapté pour détecter la présence de liquide à ladite profondeur sélectionnée dans la chambre d'amorçage (50) et pour signaler si du liquide est présent à ladite profondeur sélectionnée ; et
un contrôleur (120) adapté pour contrôler le fonctionnement de ladite pompe primaire (14) et de l'amorce (64, 66) en fonction de si ledit signal indique la présence de fluide à ladite profondeur sélectionnée ; **caractérisé par** les faits que :
le capteur (80) a un arbre cylindrique s'étendant dans ladite chambre d'amorçage (50) avec un dôme de détection (86) sur une extrémité de l'arbre cylindrique (82) à ladite profondeur sélectionnée, ledit dôme de détection (86) a la forme d'une calotte sphérique avec une base verticale (88) sur une extrémité de l'arbre cylindrique (82), et ladite base verticale de la calotte (88) ayant un diamètre inférieur au diamètre de l'arbre cylindrique.

2. Le système de pompage selon la revendication 1, dans lequel ledit capteur (80) est adapté pour ajuster la sensibilité dudit capteur (80) en corrélation avec les caractéristiques dudit fluide dans ladite chambre d'amorçage (50).

3. Le système de pompage selon la revendication 1, dans lequel ledit capteur (80) comprend un algorithme adapté pour détecter la présence de liquide dans des environnements ayant diverses formes de débris dans le liquide, y compris des ficelles et des chiffons, ledit algorithme ayant des réglages pour des variables comprenant au moins l'un parmi l'amortissement du champ électromagnétique, la conductance du champ électrique et la permittivité du champ magnétique.

4. Le système de pompage selon la revendication 1, dans lequel ledit capteur (80) signale périodiquement audit contrôleur (120) si du liquide est présent à ladite profondeur sélectionnée ; et
ledit contrôleur (120) change le fonctionnement de la pompe primaire (14) entre les états amorcé et non amorcé lorsque le signal dudit capteur (80) indique un état modifié pendant une période sélectionnée.

5. Le système de pompage selon la revendication 1, dans lequel ledit contrôleur (120) est adapté pour contrôler le fonctionnement de ladite pompe primaire (14) et de l'amorce en :
activant ledit amorce (64, 66) lorsque ledit signal de capteur (80) indique que le liquide n'est pas présent à ladite profondeur sélectionnée, et
permettant à ladite pompe primaire (14) de fonctionner lorsque ledit signal de capteur est en corrélation avec une profondeur de fluide dans ladite chambre d'amorçage (50) qui est au moins la profondeur de fluide sélectionnée pour un fluide ayant des caractéristiques en corrélation avec ledit fluide dans ladite chambre d'amorçage (50).

6. Le système de pompage selon la revendication 5, dans lequel l'une desdites caractéristiques de fluide est la présence ou l'absence d'huile dans l'eau.

7. Le système de pompage selon la revendication 1, dans lequel ledit contrôleur (120) permet le fonctionnement de ladite pompe primaire (14) lorsque le signal dudit capteur (80) indique la présence de liquide à la profondeur sélectionnée pendant une période de temps sélectionnée.

8. Le système de pompage selon la revendication 1, dans lequel ledit capteur (80) détecte une interface entre le liquide et l'air à ladite profondeur sélectionnée dans la chambre d'amorçage (50), et envoie ladite interface détectée à un contrôleur (120) ; et
ledit contrôleur (120) contrôle le fonctionnement en corrélant ladite profondeur de fluide sélectionnée dans ladite chambre d'amorçage (50) avec les interfaces détectées par le capteur sélectionné (80) en fonction des caractéristiques dudit fluide dans ladite chambre d'amorçage (50), et en contrôlant ladite pompe primaire (14) et l'amorce (64, 66) en fonction de la corrélation entre ladite interface détectée sélectionnée envoyée par ledit capteur (80) et ladite profondeur de fluide sélectionnée dans ladite chambre d'amorçage (50) pour un fluide ayant des caractéristiques corrélées audit fluide dans ladite chambre d'amorçage (50).

9. Le système de pompage selon la revendication 8, dans lequel ledit fonctionnement contrôlé de ladite pompe (14) et de l'amorce (64, 66) comprend:
l'activation dudit amorce (64, 66) lorsque ladite interface détectée envoyée par ledit capteur (80) est en corrélation avec une profondeur de fluide dans ladite chambre d'amorçage (50) qui est inférieure à la profondeur de fluide sélectionnée pour un fluide ayant des caractéristiques en corrélation avec ledit fluide dans ladite chambre d'amorçage (50), et
permettre à ladite pompe primaire (14) de fonctionner lorsque ladite interface détectée envoyée par ledit capteur (80) est en corrélation avec une profondeur de fluide dans ladite chambre d'amorçage (50) qui est au moins la profondeur de fluide sélectionnée pour un fluide ayant des caractéristiques en corrélation avec ledit fluide dans ladite chambre d'amorçage (50).

10. Le système de pompage selon la revendication 9, dans lequel lesdites caractéristiques de fluide peuvent inclure au moins l'une de la présence ou de l'absence de graisses, d'huiles ou de graisses (FOG) ou d'une grande quantité de débris solides dans le fluide.

11. Le système de pompage selon la revendication 8, dans lequel ledit contrôleur (120) permet le fonctionnement de ladite pompe primaire (14) lorsque ledit capteur (80) envoie ladite interface détectée entre le liquide et l'air audit contrôleur (120) pendant une période de temps sélectionnée.
